# EUROPEAN PATENT APPLICATION

(11) **EP 2 536 119 A1**
(43) Date of publication of application: **19.12.2012**
(21) Application number: 11177477.4
(22) Date of filing: 12.08.2011
(51) Int. Cl.: H04N 1/00

(54) **Film feeding apparatus for a film scanner**

(30) Priority: 15.06.2011 CN 201110159970
(71) Applicant: Mustek Systems Inc., Hsin-Chu (TW)
(72) Inventor: Lu, Po-Ching, Hsin-Chu (TW); Chen, Chin-Wei, Hsin-Chu (TW)
(74) Representative: Blatchford, William Michael

(57) **Abstract**

A film feeding apparatus for a film scanner (201) includes a bottom plate (31), a top plate (41) formed with a slide slot (45) and a feed-in hole (43), a movable plate (51) movable between the bottom plate (31) and the top plate (41), and an actuator member (52) co-movable with the movable plate (51). The movable plate (51) cooperates with the actuator member (52) to constitute a sliding seat (5) that is movable between a non-feeding position whereat the actuator member (52) is disposed in an end (452) of the slide slot (45) such that the movable plate (51) is misaligned from the feed-in hole (43) in the top plate (41), and a feeding position whereat the actuator member (52) is disposed in an opposite end (451) of the slide slot (45) such that the movable plate (51) is aligned with the feed-in hole (43). When the sliding seat (5) is moved from the non-feeding position to the feeding position, a film (202) is pushed into the film scanner (201).

## Description

This invention relates to a film scanner, and more particularly to a film feeding apparatus for a film scanner.

Taiwanese patent No. M347590 discloses a film feeding apparatus for a film scanner, which includes a film cartridge, and a plurality of positive films disposed within the cartridge and spaced apart from each other. The film cartridge has a plurality of openings aligned with the positive films, respectively.

During use, the film cartridge is first extended through the film scanner. Next, the position of the film cartridge is adjusted manually to align a selected one of the positive films with a predetermined position of the film scanner for subsequent scanning operation.

However, accuracy of such manual adjustment is low. As a result, the position of the film cartridge needs to adjust several times, so that the film feeding process is troublesome.

The object of this invention is to provide a film feeding apparatus for a film scanner that can feed a film accurately to a predetermined position in the film scanner.

According to this invention, a film feeding apparatus for a film scanner includes a bottom plate, a top plate formed with a slide slot and a feed-in hole, a movable plate movable between the bottom plate and the top plate, and an actuator member co-movable with the movable plate. The movable plate cooperates with the actuator member to constitute a sliding seat that is movable between a non-feeding position whereat the actuator member is disposed in a distal end of the slide slot such that the movable plate is misaligned from the feed-in hole in the top plate, and a feeding position whereat the actuator member is disposed in a proximate end of the slide slot such that the movable plate is aligned with the feed-in hole. When the sliding seat is moved from the non-feeding position to the feeding position, a film is pushed into the film scanner.

As such, as long as the actuator member is moved to the proximate end of the slide slot, the film is pushed accurately by the movable plate into a predetermined position in the film scanner. Consequently, the film feeding efficiency can be increased significantly.

These and other features and advantages of this invention will become apparent in the following detailed description of three preferred embodiments of this invention, with reference to the accompanying drawings, in which:
Fig. 1 is a perspective view of the first preferred embodiment of a film feeding apparatus according to this invention and a film scanner;
Fig. 2 is an assembled perspective view of the first preferred embodiment;
Fig. 3 is an exploded perspective view of the first preferred embodiment;
Fig. 4 is a sectional view of the first preferred embodiment and the film scanner, illustrating a non-feeding position of a sliding seat;
Fig. 5 is a view similar to Fig. 4 but illustrating a feeding position of the sliding seat;
Fig. 6 is an exploded perspective view of the second preferred embodiment of a film feeding apparatus according to this invention;
Fig. 7 is a schematic sectional view of the second preferred embodiment; and

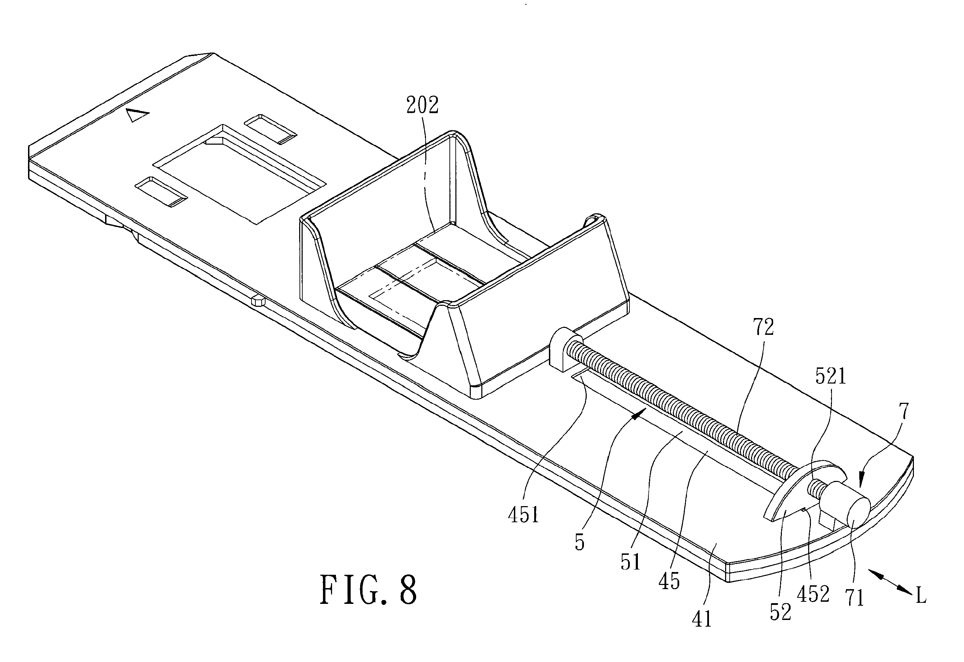

Fig. 8 is a schematic perspective view of the third preferred embodiment of a film feeding apparatus according to this invention.

Before the present invention is described in greater detail in connection with the preferred embodiments, it should be noted that similar elements and structures are designated by like reference numerals throughout the entire disclosure.

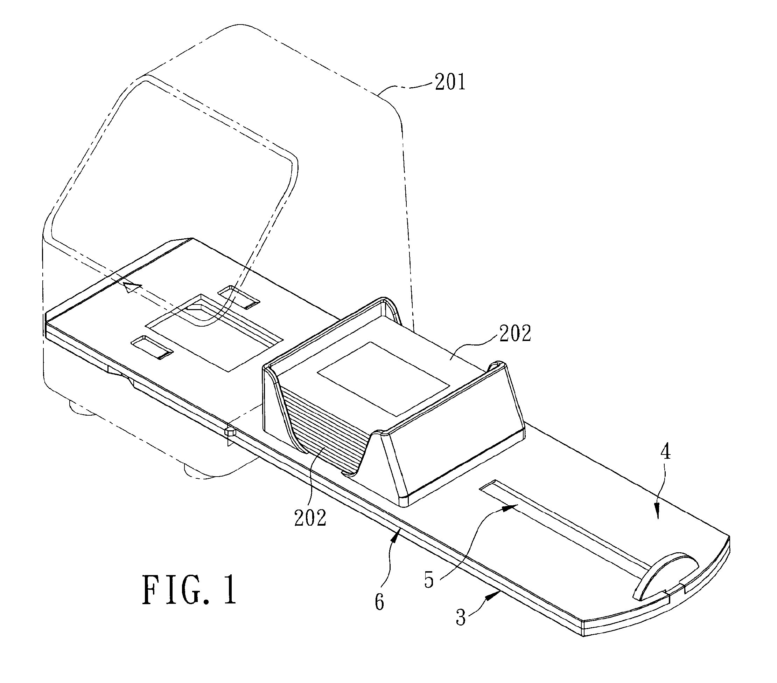

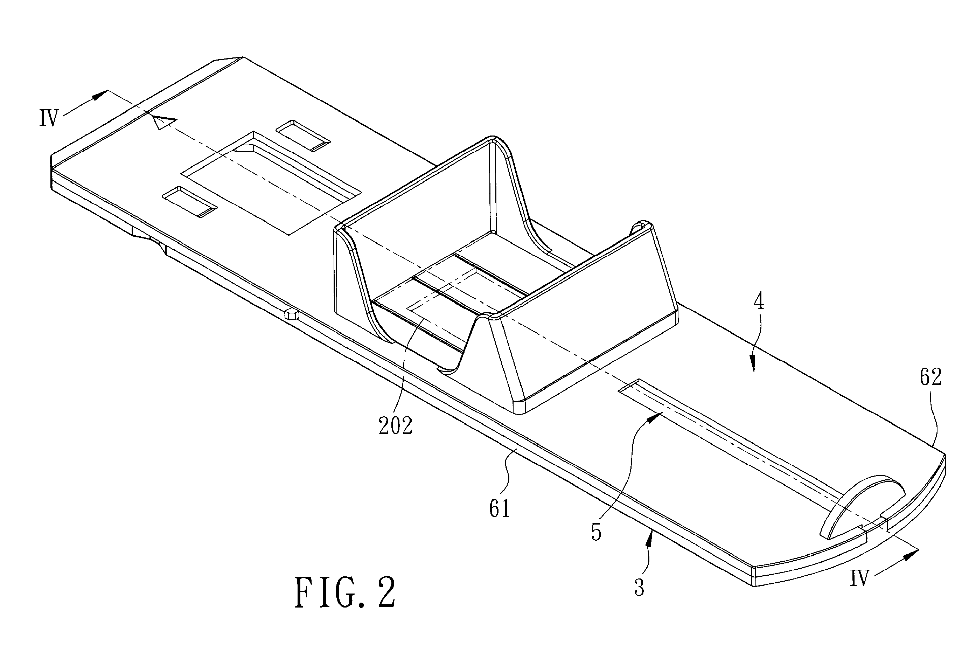

Referring to Figs. 1, 2, and 3, the first preferred embodiment of a film feeding apparatus according to this invention is used to feed a plurality of positive films 202 into a film scanner 201. The film feeding apparatus includes a bottom seat 3, a top seat 4, a sliding seat 5, and a side plate unit 6.

The bottom seat 3 includes a bottom plate 31 and a lower light-guiding hole 32 formed through the bottom plate 31.

The top seat 4 includes a top plate 41 disposed above the bottom plate 31, an upper light guiding hole 42 formed through an end portion of the top plate 41 and aligned with the lower light-guiding hole 32, a slide slot 45 formed through an opposite end portion of the top plate 41 and extending along the moving direction (L), a feed-in hole 43 formed through a middle portion of the top plate 41 and disposed between the lower light-guiding hole 32 and the slide slot 45, a film guiding unit 44 disposed on a top surface of the top plate 41 for guiding the positive films 202 into the feed-in hole 43, and two pressing members 46 extending from the top plate 41 toward the bottom plate 31 and flanking the upper light-guiding hole 42.

The film guiding unit 44 includes two U-shaped flanges 441 that define respectively two opposite sides of the feed-in hole 43. The slide slot 45 has a closed proximate end 451 proximate to the feed-in hole 43, and an open distal end 452 distal from the feed-in hole 43 and opposite to the proximate end 451. In this embodiment, the distal end 452 is closed by a projection 33 of the bottom plate 33.

The sliding seat 5 includes a movable plate 51 disposed movably between the bottom plate 31 and the top plate 41, and an actuator member 52 extending from the movable plate 51 and through the slide slot 45.

The side plate unit 6 includes two side plates 61, 62 flanking the bottom seat 3 and the top seat 4.

Each of the side plates 61, 62 has a lower plate section 611, 621 attached fixedly to the bottom plate 31, and an upper plate section 612, 622 attached fixedly to the top plate 41 and connected fixedly to the lower plate section 611, 621. As such, the bottom plate 31 and the top plate 41 are interconnected.

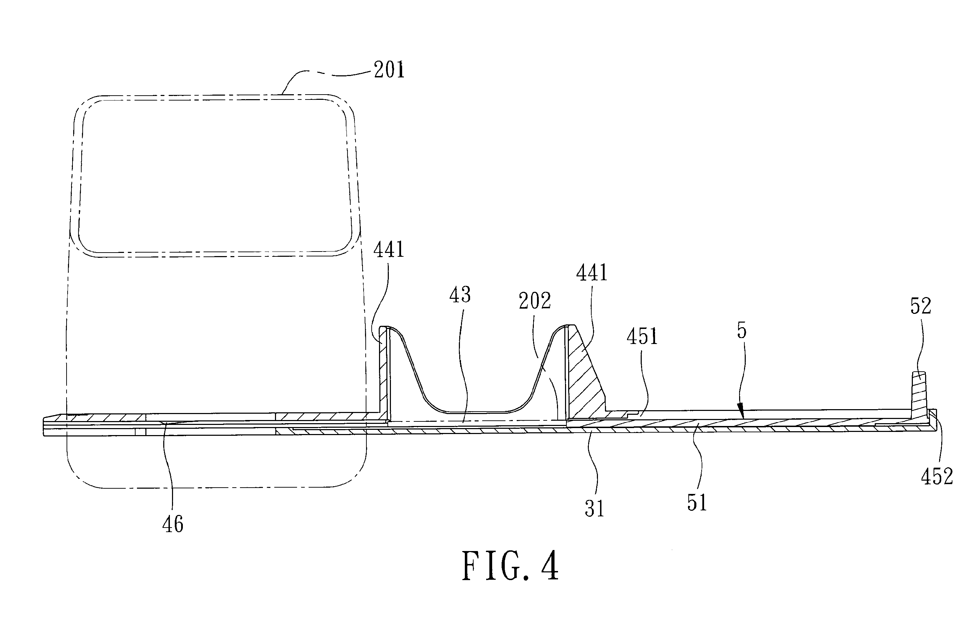

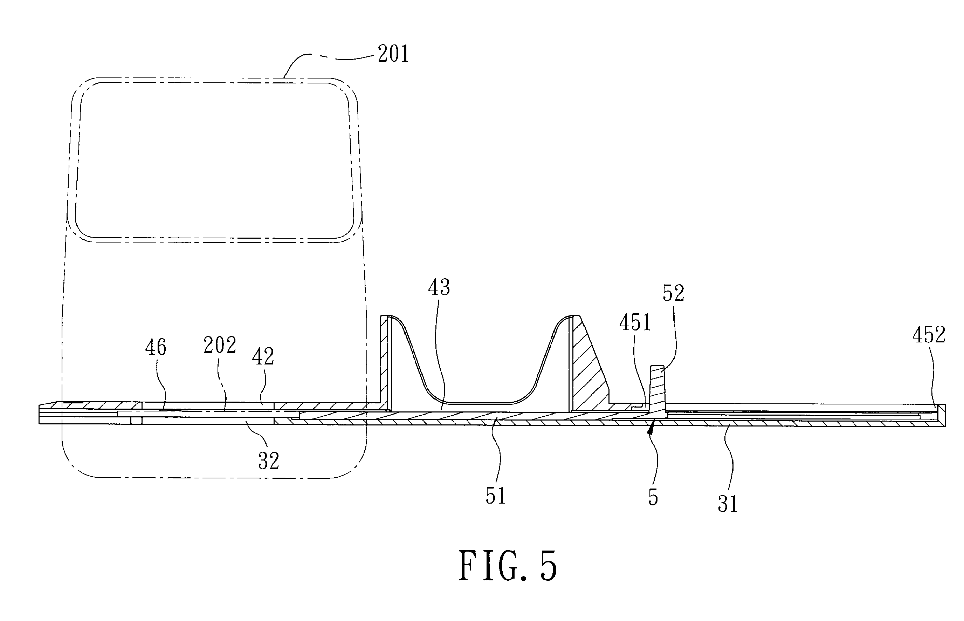

The sliding seat 5 is movable along the moving direction (L) between a non-feeding position shown in Fig. 4 and a feeding position shown in Fig. 5. In the non-feeding position, the actuator member 52 is disposed in the distal end 452 of the slide slot 45, such that the movable plate 51 is misaligned from the feed-in hole 43. In the feeding position, the actuator member 52 is disposed in the proximate end 451 of the slide slot 45, such that the movable plate 51 is disposed under the feed-in hole 43.

During use, the actuator member 52 is first operated to move the sliding seat 5 to the non-feeding position. Next, the positive films 202 are placed into a space between the U-shaped flanges 441 to allow a first lowermost positive film 202 to come into contact with the bottom plate 31. Afterwards, the actuator member 52 is operated to move the sliding seat 5 to the feeding position so as to push and move the first lowermost positive film 202 into the film scanner 201, thereby aligning the first lowermost positive film 202 with the upper and lower light guiding holes 42, 32 for subsequent scanning operation. At this time, two opposite sides of the first lowermost film 202 is pressed against the bottom plate 31 by the pressing members 46.

Upon completion of the first scanning operation, the sliding seat 5 is moved back to the non-feeding position so that a second lowermost positive film 202 drops onto the bottom plate 31. When the sliding seat 5 is pushed again to the feeding position, the second lowermost positive film 202 is moved into the film scanner 201 by the movable plate 51 to thereby push the first lowermost positive film 202 out of the film scanner 201.

As such, as long as the actuator member 52 is disposed in the proximate end 451 of the slide slot 45, one of the positive films 202 is aligned with the upper and lower light-guiding holes 42, 32 so as to allow for a scanning operation performed thereon. In this manner, the positive films 202 can be feed accurately.

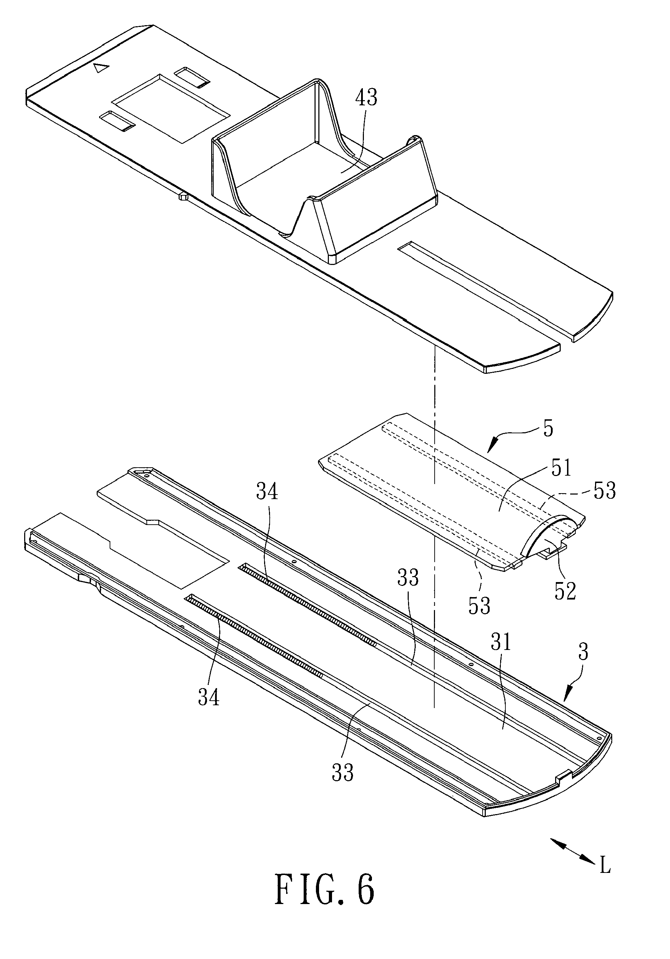

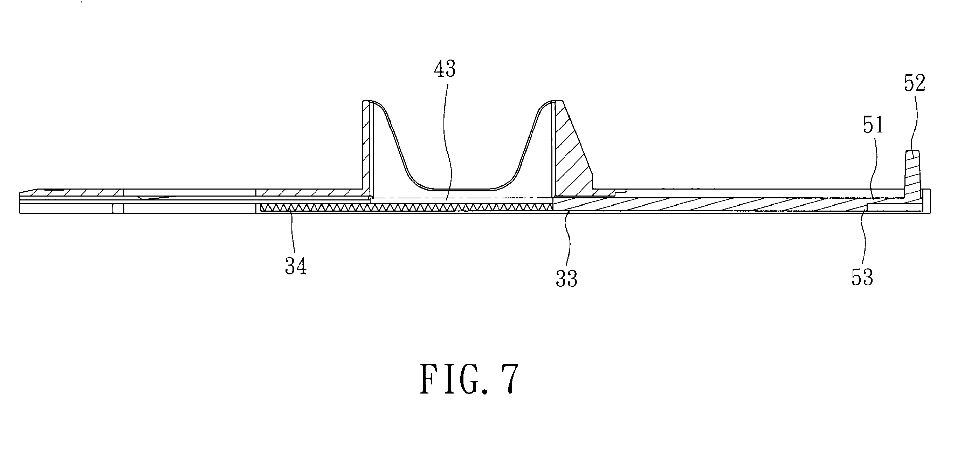

Figs. 6 and 7 show the second preferred embodiment of a film feeding apparatus according to this invention, which differs from the first preferred embodiment in that, in this embodiment, the bottom seat 3 further includes two guide slots 33 formed in the bottom plate 31, and two resilient members 34 disposes respectively within the guide slots 33 for biasing the sliding seat 5 toward the non-feeding position, and the sliding seat 5 further includes two guide rails 53 extending downwardly from the movable plate 51 and received respectively and movably within the guide slots 33.

The guide slots 33 extend along the moving direction (L), and are located respectively to two opposite sides of the feed-in hole 43. Each of the resilient members 34 is configured as a coiled compression spring, and has an end abutting against an end of the corresponding guide rail 53.

When a pushing force is applied to move the sliding seat 5 to the feeding position, the resilient members 34 are clamped and compressed between the bottom plate 31 and the guide rails 53 to store a return force. Upon release of the pushing force, by virtue the return force, the sliding seat 5 is biased to return to the non-feeding position. As such, the second preferred embodiment is more convenient to operate.

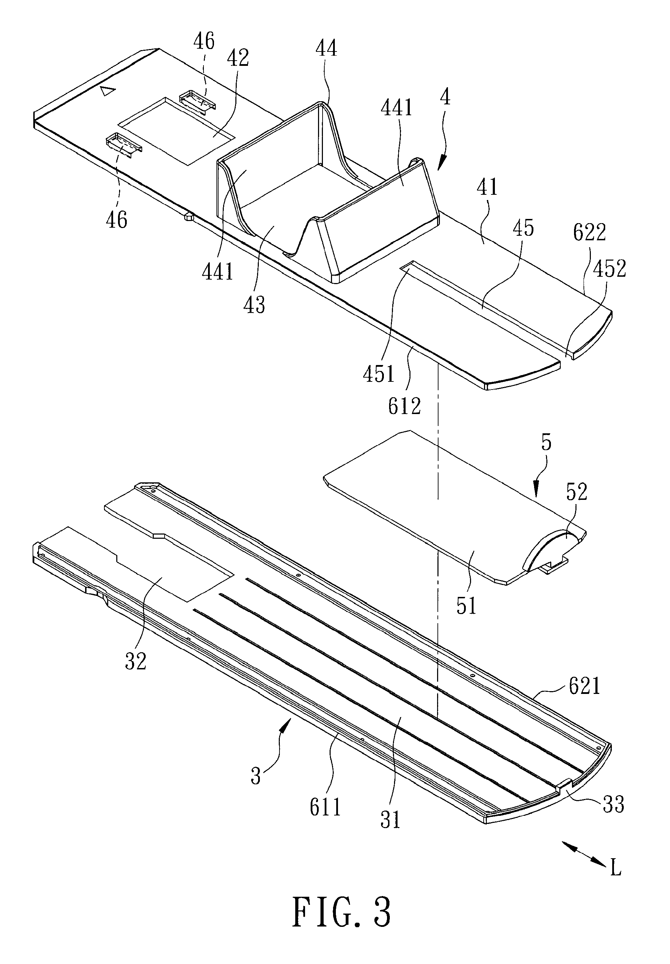

Fig. 3 shows the third preferred embodiment of a film feeding apparatus according to this invention, which is similar in construction to the first preferred embodiment except for addition of a driving device 7 and formation of a threaded hole 521 through the actuator member 52.

The driving device 7 includes a motor 71 disposed on the top plate 41, and a threaded rod 72 engaging the threaded hole 521 in the actuator member 52 and driven by the motor 71 to rotate to thereby move the actuator member 52 along the slide slot 45.

As such, the sliding seat 5 can be moved between the non-feeding position and the feeding position by operating simply the motor 71. In other words, the third preferred embodiment is easier to operate.

## Claims

1. A film feeding apparatus for a film scanner (201), **characterized by**:
a bottom seat (3) including a bottom plate (31) and a lower light-guiding hole (32) formed through said bottom plate (31);
a top seat (4) including a top plate (41) disposed above and connected to said bottom plate (31), an upper light-guiding hole (42) formed through said top plate (41) and aligned with said lower light-guiding hole (32), a slide slot (45) formed through said top plate (41) and extending along a moving direction (L), and a feed-in hole (43) formed through said top plate (41) and between said upper light-guiding hole (42) and said slide slot (45) and adapted for receiving at least one film (202), said slide slot (45) having a proximate end (451) proximate to said feed-in hole (43), and a distal end (452) distal from said feed-in hole (43) and opposite to said proximate end (451); and
a sliding seat (5) including a movable plate (51) disposed movably between said bottom plate (31) and said top plate (41), and an actuator member (52) extending from said movable plate (51) and through said slide slot (45) in said top seat (4), said sliding seat (5) being movable between a non-feeding position whereat said actuator member (52) is disposed in said distal end (452) of said slide slot (45) such that said movable plate (51) is misaligned from said feed-in hole (43) in said top plate (41), and a feeding position whereat said actuator member (52) is disposed in said proximate end (451) of said slide slot (45) such that said movable plate (51) is disposed under said feed-in hole (43);
wherein, when said sliding seat (5) is moved from the non-feeding position to the feeding position, the film (202) is pushed and moved into the film scanner (201) to align the film (202) with said upper and lower light-guiding holes (42, 32) for subsequent scanning operation.

2. The film feeding apparatus as claimed in Claim 1, **characterized in that** said top seat (4) further includes a film guiding unit (44) disposed on a top surface of said top plate (41) and adapted for guiding the film (202) into said feed-in hole (43).

3. The film feeding apparatus as claimed in Claim 2, further **characterized in that** said film guiding unit (44) includes two U-shaped flanges (441) that define respectively two opposite sides of said feed-in hole (43).

4. The film feeding apparatus as claimed in Claim 1, **characterized in that** said top seat (4) further includes at least one pressing member (46) extending from said top plate (41) toward said bottom plate (31) and adapted for pressing the film (202) against said bottom plate (31) when said sliding seat (5) is disposed at the feeding position.

5. The film feeding apparatus as claimed in Claim 1, further **characterized by** a side plate unit (6) including two side plates (61, 62) flanking and interconnecting said top seat (4) and said bottom seat (3).

6. The film feeding apparatus as claimed in Claim 1, **characterized in that** said bottom seat (3) further includes at least one guide slot (33) formed in said bottom plate (31) and extending along the moving direction (L), and said sliding seat (5) further includes at least one guide rail (53) extending from said movable plate (51) and received movably within said guide slot in said bottom seat (3), said bottom seat (3) further including a resilient member (34) for biasing said sliding seat (5) toward the non-feeding position.

7. The film feeding apparatus as claimed in Claim 6, further **characterized in that** said resilient member (34) is configured as a coiled compression spring, is disposed within said guide slot (33) in said bottom plate (31), and has an end abutting against an end of said guide rail (53) of said sliding seat (5).

8. The film feeding apparatus as claimed in Claim 1, further **characterized by** a driving device (7), said actuator member (52) having a threaded hole (521), said driving device (7) including a motor (71) disposed on said top plate (41), and a threaded rod (72) engaging said threaded hole in said actuator member (52) and driven by said motor (71) to rotate said threaded rod (72) to thereby move said actuator member (52) along said slide slot (45).
